# EUROPÄISCHE PATENTSCHRIFT

(11) **EP 3 277 976 B1**
(45) Veröffentlichungstag und Bekanntmachung des Hinweises auf die Patenterteilung: **12.06.2019**
(21) Anmeldenummer: 16707108.3
(22) Anmeldetag: 01.03.2016
(51) Int. Cl.: F16F 9/34

(54) **DÄMPFVENTIL FÜR EINEN SCHWINGUNGSDÄMPFER**
DAMPING VALVE FOR A VIBRATION DAMPER
SOUPAPE D'AMORTISSEMENT POUR AMORTISSEUR DE VIBRATIONS

(30) Priorität: 02.04.2015 DE 102015206022
(43) Veröffentlichungstag der Anmeldung: 07.02.2018
(73) Patentinhaber: ZF Friedrichshafen AG, 88046 Friedrichshafen (DE)
(72) Erfinder: KNEZEVIC, Aleksandar, 53783 Eitorf (DE); RÖSSELER, Jörg, 53809 Ruppichteroth (DE)
(86) Internationale Anmeldenummer: PCT/EP2016/054264
(87) Internationale Veröffentlichungsnummer: WO 2016/155961

(56) Entgegenhaltungen:
- EP-A1- 1 600 662
- GB-A- 2 170 572
- GB-A- 2 233 064
- US-A1- 2015 152 936

## Beschreibung

Die Erfindung betrifft ein Dämpfventil gemäß dem Oberbegriff von Patentanspruch 1.

Ein Dämpfventil für einen Schwingungsdämpfer umfasst einen Dämpfventilkörper mit mindestens einem Durchlasskanal, dessen Austrittsseite von mindestens einer Ventilscheibe zumindest teilweise abgedeckt wird. Bei einer Anströmung der Ventilseite über den Durchlasskanal hebt die Ventilscheibe von einer Ventilsitzfläche ab. Um die Ventilscheibe gegen eine mechanische Überlastung zu schützen, wird in der Regel mindestens eine Stützscheibe als Anschlag verwendet, der die Abhubbewegung begrenzt. Die Stützscheibe ist in der einfachsten Ausführung als eine einfache, in der Regel metallische Ringscheibe ausgeführt. Im Gegensatz dazu ist die Ventilscheibe in Grenzen elastisch verformbar oder gegen eine Feder axial beweglich gelagert. Unabhängig von der Ausführungsform tritt im Dämpfbetrieb bei plötzlichen Spitzenbelastungen der Effekt auf, dass die Ventilscheibe an die Stützscheibe anschlägt.
Dieses Anschlagen ist akustisch vernehmbar.

Eine Lösung kann darin bestehen, dass man mehrere Ventilscheiben in geschichteter Anordnung verwendet. Durch die Schichtung ergibt sich eine Stützfunktion innerhalb des Scheibenpakets. Ein Nachteil kann darin liegen, dass bei tendenziell starren Ventilscheiben eine Erhöhung der Dämpfkraftkennlinie auftritt.

Aus der DE 18 17 392 B2 ist ein Dämpfventil für einen Schwingungsdämpfer bekannt, das eine Elastomerauflage in der Bauform eines Elastomerrings aufweist, der einer Anschlagbewegung der Ventilscheibe an einem Stützring entgegenwirkt. Der Elastomerring wirkt bei der Anschlagfunktion wie ein Dichtring, so dass nur eine radiale Abströmung von Dämpfmedium aus dem Dämpfventil erfolgen kann.

Die US 2015/152936 A1 beschreibt ein Dämpfventil bei dem ein Stützteil 130 einseitig in Richtung mindestens einer Ventilscheibe 122 Vorsprünge 131 aufweist, die das Abhubverhalten der Ventilscheibe beeinflusst.

Die JP 2008 274991 offenbart ein Dämpfventil mit einer Steuerscheibe, die von einer Anzahl von starren Steuerkugeln durchdrungen wird. Diese Steuerkugel übertragen die Abhubbewegung eines ersten Ventilscheibenpakets auf ein zweites Ventilscheibenpaket.

Die JP 2015 117737 A beschreibt ebenfalls den Einsatz von Steuerkugeln durch eine Steuerscheibe.

Die Druckschrift GB2170572B bildet der naheliegendsten Stand der Technik und offenbart eine derartige Vorrichtung.

Die Aufgabe der vorliegenden Erfindung besteht darin, das gattungsbildende Dämpfventil im Hinblick auf ein verbessertes Abströmverhalten weiter zu bilden.

Die Aufgabe wird dadurch durch die Merkmale des Patentanspruchs 1 gelöst. Zwischen den mindestens zwei Einzelstützelementen bestehen mindestens zwei Strömungsquerschnitte, die dem Dämpfmedium als Strömungswege aus dem Dämpfventil zur Verfügung stehen.

Bei einer derartigen Bauform können mit einer einzigen Stützscheibe bei wechselseitiger Einbaulage zwei unterschiedliche Abstützkennlinien erreicht werden.

Bevorzugt sind die Einzelstützelemente als Kugeln ausgeführt sind. Ein derartiges Einzelstützelement bietet den Vorteil, dass es keine besondere Ausrichtung zur Ventilscheibe bedarf und sehr leicht als Massenprodukt herstellbar ist.

Die Einzelstützelemente können auf unterschiedlichen Teilkreisen angeordnet sein und damit in radialer Richtung mehrere Abstützpunkte für die Ventilscheibe bereitstellen.

Man kann auch vorsehen, dass die Einzelstützelemente eine Anschlagebene bilden. Eine derartige Anschlagebene stützt die Ventilscheibe in der Wirkung flächig ab.

Alternativ oder in Kombination dazu können die Einzelstützelemente unterschiedliche Federraten aufweisen. Auch diese Maßnahme kann dazu dienen, die Abhubbewegung der Ventilscheibe gezielt zu steuern.

Anhand der folgenden Figurenbeschreibung soll die Erfindung näher erläutert werden.

Es zeigt:
- Fig. 1: Dämpfventil in einer Schnittdarstellung
- Fig. 2: Draufsicht auf eine Stützscheibe des Dämpfventils nach Fig. 1
- Fig. 3 -5: verschiede Ausführungsformen einer Stützscheibe

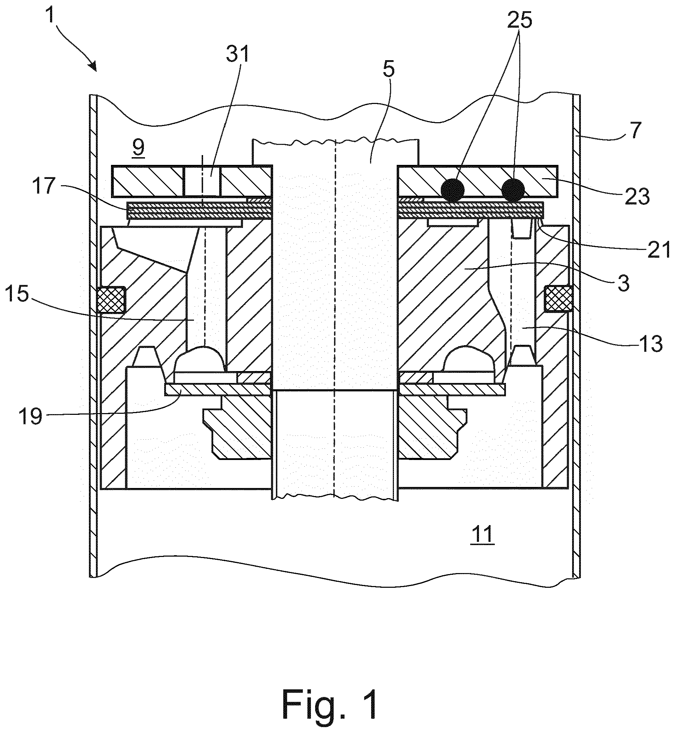

Die Figur 1 zeigt ein Dämpfventil 1 für einen Schwingungsdämpfer beliebiger Bauweise. Das Dämpfventil 1 umfasst einen Dämpfventilkörper 3, der an einer Kolbenstange 5 befestigt ist. Die Erfindung ist nicht auf eine derartige Ausführungsform beschränkt und kann z. B. bei einem Bodenventil oder auch im Rahmen eines verstellbaren Dämpfventils eingesetzt werden.

Der Dämpfventilkörper 3 unterteilt einen Zylinder 7 des Schwingungsdämpfers in einen kolbenstangenseitigen und einen kolbenstangenfernen Arbeitsraum 9;11, die beide mit Dämpfmedium gefüllt sind. In dem Dämpfventilkörper 3 sind Durchtrittskanäle 13; 15 für jeweils eine Durchströmungsrichtung auf unterschiedlichen Teilkreisen ausgeführt. Die Ausgestaltung der Durchtrittskanäle ist nur beispielhaft anzusehen. Eine Austrittsseite der Durchtrittskanäle 13; 15 ist mit mindestens einer Ventilscheibe 17; 19 zumindest teilweise abgedeckt.

Bei einer Anströmung der Ventilscheibe 17 ausgehend vom kolbenstangenfernen Arbeitsraum 11 hebt die Ventilscheibe 17 von ihrer Ventilsitzfläche 21 ab. Die Abhubbewegung wird von einer Stützscheibe 23 in Kombination mit einer Elastomerauflage gesteuert bzw. gedämpft gebremst. Die Elastomerauflage wird von mehreren Einzelstützelementen 25 gebildet.

Bevorzugt sind die Einzelstützelemente 25 als Kugeln ausgeführt. Vorteilhaft sind auch tonnenförmige Bauformen. Beide Bauformen lassen sich einfach und lageunabhängig montieren.

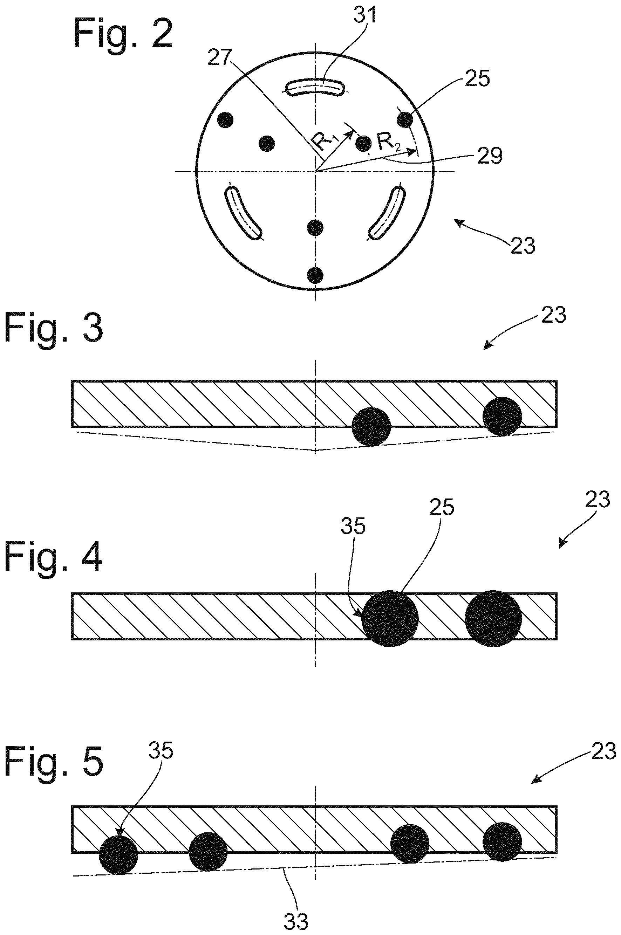

Wie die Figur 2 zeigt, sind die Einzelstützelemente 25 in der Stützscheibe 23 auf unterschiedlichen Teilkreisen 27; 29 mit den Radien R₁ und R₂ angeordnet und bilden eine Anschlagebene. Selbstverständlich können auch weitere Teilkreisdurchmesser verwendet werden. Es besteht die Möglichkeit, dass die Stützscheibe 23 mit Axialöffnungen 31 ausgeführt ist, die einen Strömungsweg zwischen einer Oberseite der Ventilscheibe 17 und dem angrenzenden Arbeitsraum 9 bilden, siehe Figur 1.

Wenn die Ventilscheibe 17 von der Ventilsitzfläche 21 abgehoben ist, dann kann das Dämpfmedium nicht nur radial an der Ventilscheibe 17 abfließen, sondern auch zwischen den Einzelstützsegmenten 25 strömen und dabei die Axialöffnungen 31 als Abströmweg nutzen.

Die Figuren 3 und 4 zeigen beispielhaft, dass die Einzelstützelemente 25 un der Stützscheibe 23 einen unterschiedlichen axialen Abstand zur Ventilscheibe 17 aufweisen können, wie die Hilfslinien zeigen. In der Fig. 3 ist beispielsweise dargestellt, dass der Abhubweg am Außenumfang der Ventilscheibe 17 größer ist als im zentralen Bereich.

In der Fig. 5 bilden die Einzelstützelemente 25 eine Anschlagebene 33, die als eine schiefe Ebene ausgeführt ist, um z. B. einen definierten Abhubpunkt der Ventilscheibe 17 zu erreichen.

Dazu kann man Einzelstützelemente 25 mit unterschiedlichen Durchmessern oder Wirkhöhen vorsehen. Bei standardisierten Einzelstützelementen 25 kann man jedoch auch vorsehen, dass muldenförmige Aufnahmen 35 in der Stützscheibe 23 für die Einzelstützelemente 25 unterschiedliche Aufnahmetiefen aufweisen, so dass über die Aufnahmetiefe der axiale Überstand und in infolge dessen der Abstand zur Ventilscheibe 17 bestimmt wird.

Alternativ oder in Kombination können die Einzelstützelemente 25 unterschiedliche Federraten aufweisen. Die Federrate kann man bei standardisierter Bauform der Einzelstützelemente 25 z. B. durch eine unterschiedliche shore-Härte des Ausgangswerksstoffs erreicht werden.

Die Figur 4 zeigt eine Bauform der Stützscheibe 23, die axial durchgehende Aufnahmeöffnungen 35 aufweist und die Einzelstützelemente 25 die Stützscheibe 23 mit einem beidseitigen jedoch unterschiedlichen Überstand durchdringen. Eine derartige Stützscheibe kann dann über zwei Einbaulagen verfügen. Je nachdem, welche Deckseite in Richtung der Ventilscheibe 17 weist, ergibt sich eine bestimmte Dämpfkennlinie der Einzelstützelemente 25.

### Bezugszeichen

- 1: Dämpfventil
- 3: Dämpfventilkörper
- 5: Kolbenstange
- 7: Zylinder
- 9: kolbenstangenseitiger Arbeitsraum
- 11: kolbenstangenferner Arbeitsraum
- 13: Durchtrittskanal
- 15: Durchtrittskanal
- 17: Ventilscheibe
- 19: Ventilscheibe
- 21: Ventilsitzfläche
- 23: Stützscheibe
- 25: Einzelstützelement
- 27: Teilkreis
- 29: Teilkreis
- 31: Axialöffnungen
- 33: Anschlagebene
- 35: Aufnahmen

## Patentansprüche

1. Dämpfventil (1) für einen Schwingungsdämpfer, umfassend einen Dämpfventilkörper (3) mit mindestens einem Durchlasskanal (13; 15), dessen Austrittsseite von mindestens einer Ventilscheibe (17; 19) zumindest teilweise abgedeckt wird, wobei die mindestens eine Ventilscheibe (17; 19) bei einer Anströmung über den Durchlasskanal (13; 15) von einer Ventilsitzfläche (21) abhebt und eine Stützscheibe (23) als Anschlag die Abhubbewegung begrenzt, wobei die Stützscheibe (23) in Richtung der Ventilscheibe (17; 19) mit einer Elastomerauflage (25) bestückt ist, wobei die Elastomerauflage von mehreren Einzelstützelementen (25) gebildet wird, **dadurch gekennzeichnet, dass** die Stützscheibe (23) axial durchgehende Aufnahmeöffnungen (35) aufweist und die Einzelstützelemente (25) die Stützscheibe (23) mit einem beidseitigen Überstand durchdringen.

2. Dämpfventil nach Anspruch 1, **dadurch gekennzeichnet, dass** die Einzelstützelemente (25) als Kugeln ausgeführt sind.

3. Dämpfventil nach Anspruch 1, **dadurch gekennzeichnet, dass** Einzelstützelemente (25) auf unterschiedlichen Teilkreisen (27; 29) angeordnet sind.

4. Dämpfventil nach Anspruch 1, **dadurch gekennzeichnet, dass** die Einzelstützelemente (25) eine Anschlagebene (33) bilden.

5. Dämpfventil nach Anspruch 1, **dadurch gekennzeichnet, dass** die Einzelstützelemente (25) unterschiedliche Federraten aufweisen.

## Claims

1. Damping valve (1) for a vibration damper, comprising a damping valve body (3) with at least one passage duct (13; 15), the outlet side of which is at least partially covered by at least one valve disc (17; 19), wherein the at least one valve disc (17; 19) lifts off from a valve seat face (21) when there is a flow against it via the passage duct (13; 15), and a support disc (23) limits the lifting off movement as a stop, wherein the support disc (23), in the direction of the valve disc (17; 19) is equipped with an elastomer coating (25), wherein the elastomer coating is formed by a plurality of individual support elements (25), **characterized in that** the support disc (23) has axially continuous receptacle openings (35), and the individual support elements (25) penetrate the support disc (23) with a protrusion on both sides.

2. Damping valve according to Claim 1, **characterized in that** the individual support elements (25) are embodied as spheres.

3. Damping valve according to Claim 1, **characterized in that** individual support elements (25) are arranged on different pitch circles (27; 29).

4. Damping valve according to Claim 1, **characterized in that** the individual support elements (25) form a stop plane (33).

5. Damping valve according to Claim 1, **characterized in that** the individual support elements (25) have different spring rates.

## Revendications

1. Soupape d'amortissement (1) pour un amortisseur d'oscillations, comprenant un corps de soupape d'amortissement (3) avec au moins un canal de passage (13 ; 15), dont le côté de sortie est recouvert au moins en partie par au moins un disque de soupape (17 ; 19), l'au moins un disque de soupape (17 ; 19) se soulevant d'une surface de siège de soupape (21) dans le cas d'un afflux par le biais du canal de passage (13 ; 15) et un disque de support (23) en tant que butée limitant le déplacement de la course de levage, le disque de support (23) étant revêtu dans la direction du disque de soupape (17 ; 19) par un appui en élastomère (25), l'appui en élastomère étant formé par plusieurs éléments de support individuels (25), **caractérisée en ce que** le disque de support (23) présente des ouvertures de réception (35) le traversant axialement et les éléments de support individuels (25) traversent le disque de support (23) avec un dépassement des deux côtés.

2. Soupape d'amortissement selon la revendication 1, **caractérisée en ce que** les éléments de support individuels (25) sont réalisés sous forme de billes.

3. Soupape d'amortissement selon la revendication 1, **caractérisée en ce que** les éléments de support individuels (25) sont disposés sur des cercles partiels différents (27 ; 29).

4. Soupape d'amortissement selon la revendication 1, **caractérisée en ce que** les éléments de support individuels (25) forment un plan de butée (33).

5. Soupape d'amortissement selon la revendication 1, **caractérisée en ce que** les éléments de support individuels (25) présentent des constantes de ressort différentes.
